# EUROPEAN PATENT APPLICATION

(11) **EP 2 262 164 A1**
(43) Date of publication of application: **15.12.2010**
(21) Application number: 08736691.0
(22) Date of filing: 18.02.2008
(51) Int. Cl.: H04L 9/08, H04L 9/32, G06F 21/00, G07F 7/10

(54) **SECURE DATA TRANSFER**

(71) Applicant: Microelectronica Española, S.A.U., 28002 Madrid (ES)
(72) Inventor: CAÑIS ROBLES, Javier, E-28002 Madrid (ES); YUAN, Po, Milpitas, California 95035 (US)
(74) Representative: Carpintero Lopez, Francisco
(86) International application number: PCT/ES2008/000087
(87) International publication number: WO 2009/103824

(57) **Abstract**

A method of secure transfer of data between entities, which comprises: establishing a first secure channel (740, 840) between a first entity (710, 810) having at least one first credential (7101, 8101) and a second entity (720, 820) having at least one second credential (7201, 8201); establishing a second secure channel (750, 850) between said first entity (710, 810) and a third entity (780, 880), said third entity (780, 880) being trusted by said first entity (710, 810); through said second secure channel (750, 850) between said first entity (710, 810) and said third entity (780, 880), delegating (790, 890) said first secure channel (740, 840) from said first entity (710, 810) to said third entity (780, 880) for transferring data between said second entity (720, 820) and said third entity (780, 880).

## Description

### FIELD OF THE INVENTION

The present invention is related to the, field of exchanging information between two entities and, more particularly, to establishing secure channels to transfer data between two entities through a non-secure medium.

### STATE OF THE ART

In the context of the present disclosure, the following terms and expressions may be interpreted as set forth below:
TrustedFlash security system: System which is designed to enhance flash memory card capabilities with a set of security features that enable the card to protect and control the usage of stored data. TrustedFlash provides several types of authentication algorithms and allows for multiple authenticated entities to concurrently use the card. The TrustedFlash security system allows for configuring a specific set of permissions (rights) for every authenticated entity. Every command that is received by a flash memory module is associated with a currently authenticated entity, and the service request is validated against the registered rights for that entity. The flash memory module grants the request and executes the command only if the service is permitted for the requesting entity. TrustedFlash™ is a trademark of SanDisk Corporation.
TrustedFlash card: Memory card which supports TrustedFlash security technology.

Smart card, chip card or integrated circuit card (ICC): is defined as any pocket-sized card with embedded integrated circuits which can process information.

UICC (Universal Integrated Circuit Card): is the smart card, chip card or integrated circuit card used in mobile terminals in GSM and UMTS networks. In a GSM network, the UICC contains a SIM application and in a UMTS network it is the USIM application. A UICC may contain several applications, making it possible for the same smart card to give access to both GSM and UMTS networks, and also provide storage of a phone book and other applications. It is also possible to access a GSM network using an USIM application and it is possible to access UMTS networks using a SIM application with mobile terminals prepared for this.

SIM (Subscriber Identity Module): is part of a removable smart card or ICC (Integrated Circuit Card), also known as SIM Card, for mobile cellular telephony devices such as mobile computers and mobile phones. It is managed by a GSM (Global System for Mobile communications) mobile network operator (MNO) and comprises a module for identifying a subscriber who accesses a mobile communications network (MNO). It is also capable of storing subscriber information, such as its agenda or text messages.

USIM (Universal Subscriber Identity Module: An application for UMTS mobile telephony running on a UICC (Universal Integrated Circuit Card), also known as USIM Card, which is inserted in a 3G mobile phone.

MegaSIM Card: Large capacity Universal Integrated Circuit Card (UICC). In other words, it is a SIM Card or USIM Card which additionally comprises a large amount of storing capacity (i.e. more than 128 Bytes), typically flash memory, which allows the subscriber and the MNO to store a large amount of information, such as video or images. A large capacity Universal Integrated Circuit Card (UICC) or MegaSIM Card usually comprises a high-speed communications interface, such as USB but not limited thereto, which allows offering services which imply a large exchange of information. MegaSIM is a registered term (MegaSIM™) by MSYSTEMS LTD., Kefar Saba, Israel.

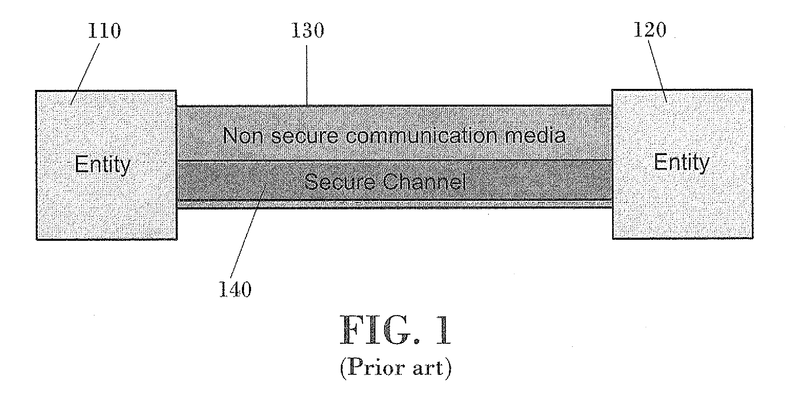

When two entities are connected by a noun-secured communication medium, a secure channel can be established over that non-secured communication medium in order to transfer data while providing resistance to interception or tampering. Figure 1 shows how two entities 110 120 can securely communicate through an unsecured communication medium 130 by establishing a secure channel 140.

Secure channels like the one illustrated in figure 1 can be implemented using different cryptographic techniques. The first secure channel was implemented in 1976, when two researchers proposed a key exchange technique, the so-called Diffie-Hellman key exchange (D-H). This technique was based on an agreement between two entities in order to establish a key, which was known only by the two entities involved. Once the key was agreed to by the two entities, encrypted data could be exchanged using the agreed key. It thus avoided the risk of interception of the transferred data by third parties.

Other examples of secure channels are those used in technologies like IPsec, used to secure the internet protocol (IP); Transport Layer Security (TLS), used to provide secure communications to Internet technologies like web browsing, e-mail, Internet faxing or instant messaging; and Global Platform, which defines a secure smart card infrastructure, which allows secured and dynamic management of the card and its applications.

Secure channel operation is mainly based on three processes: an authentication process, a session keys agreement and a secure data transference.

The authentication process involves mutual authentication between the two entities which are going to establish a secure channel. This authentication can be based on shared secrets or credentials for symmetric algorithms or on asymmetric algorithms based on, for example, public key infrastructures (PKI).

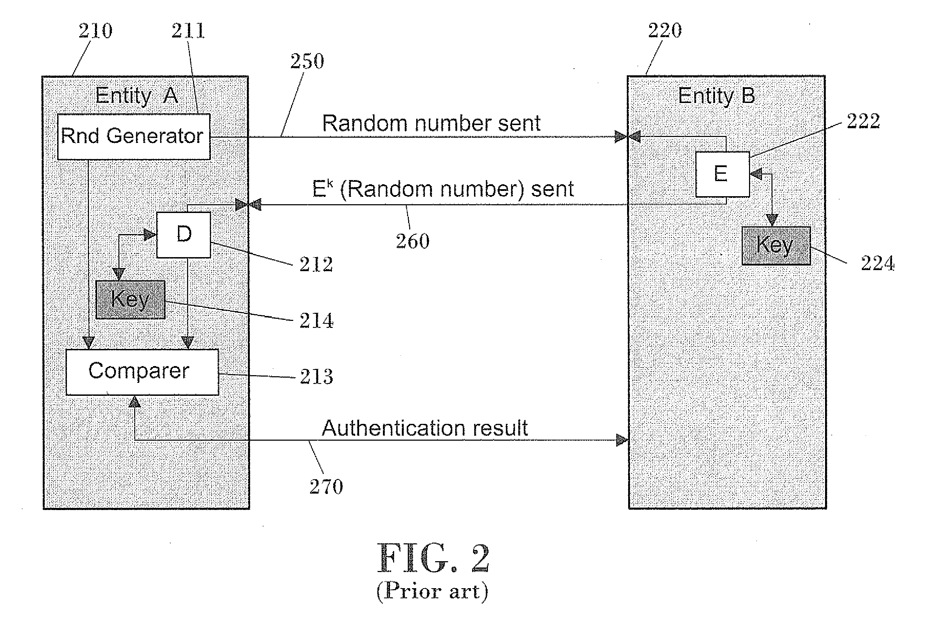

Figure 2 shows an example of symmetric authentication process, in which an entity B 220 is authenticated by an entity A 210. Entity A 210 comprises a random number generator 211, a decrypter 212 based on a symmetric algorithm, a comparator 213 and a private key 214. Entity B 220 comprises an encrypter 222 based on the same symmetric algorithm as entity A 220 and the same private key 224 as Entity A 210. Entity A 210 generates a random number using its random number generator 211 which is sent 250 to Entity B 220. Entity B 220 encrypts the received number using its encrypter 222 with the private key 224 and sends 260 the result to Entity A 210. Entity A 210 decrypts the received number using its decrypter 212 with the private key 214 and sends the result to the comparator 213, which compares the outputs of the decrypter 212 and the random number generator 211. If both inputs of the comparator 213 are equal, then Entity B 220 is authenticated by Entity A 210. This is indicated to Entity B 220 through a authentication result 270. By contrast, if both inputs of the comparator 213 are not equal, Entity B 220 is not authenticated by Entity A 210. This is indicated to Entity B 220 through an authentication result 270. Although figure 2 only shows the authentication at one side, it can be extended to the other side as well.

As far as the asymmetric authentication protocol is concerned, it usually utilizes Public Key Infrastructure (PKI) and RSA (Rivest, Shamir and Adleman) algorithms. As defined by these algorithms, each party in the authentication process is allowed, and actually encouraged, to create a unique RSA key-pair. Each key-pair consists of public and private keys. The keys cannot provide proof of identity since the source of the keys is anonymous. The PKI layer calls a trusted third party, which signs each one of the public keys. The public key from the trusted third party is pre-shared between the parties in charge of authenticating each other, and is used to verify the public keys. Once trust is established (both parties involved have determined that the public key provided by the trusted third party may be trusted), the protocol continues authentication by verifying that each party holds the matching private key. The keys are exchanged after verification is complete.

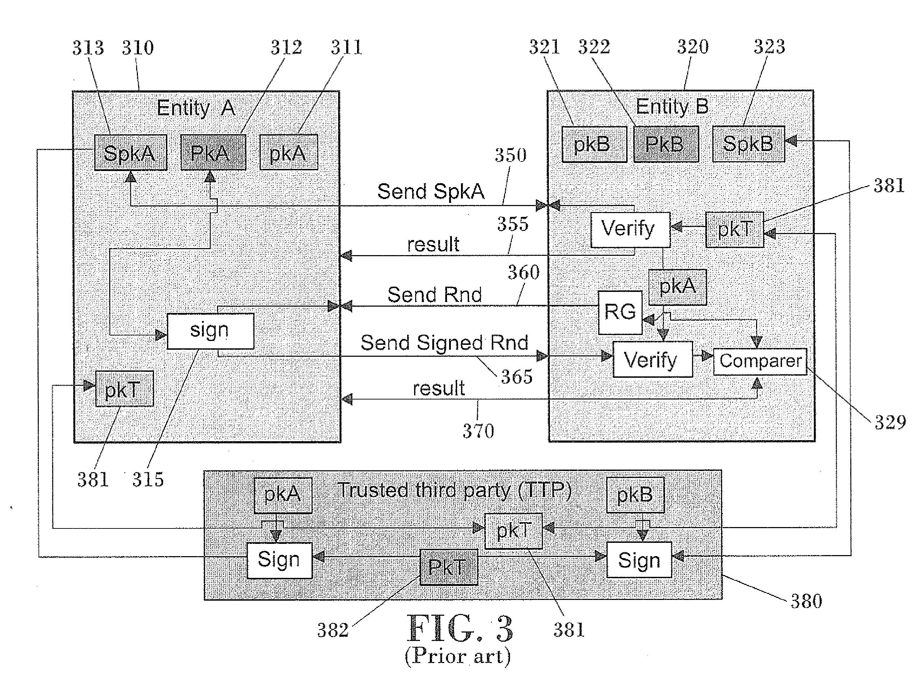

Figure 3 shows and example of asymmetric authentication between a first entity A 310 and a second entity B 320 in collaboration with a third party 380 which has to be trusted by both entities 310 320, based on the above-mentioned RSA algorithm. Each entity 310 320 comprises RSA key pair, a public key (pkA 311 and pkB 321 respectively) and a private key (PkA 312 and PkB 322 respectively). Additionally, both entities comprise a signature SpkA 313 SpkB 323 of their public keys pkA 311 and pkB 321, which use the private key PkT 382 of the trusted Third Party 380 and the public key pkT 381 of the trusted Third Party 380.

As illustrated in figure 3, to perform the authentication, entity A 310 sends 350 its signed public key SpkA 313 to entity B 320, which verifies that the public key pkA 311 is trusted by the third party 380 using its public key pkT 381. If the verification is successful, the public key pkA 311 of Entity A 310 is authenticated by entity B 320 and a result 355 is sent to Entity A 310. In order to authenticate its private key PkB 322, entity B 320 sends 360 a random number to Entity A 310 which signs 315 such random number using its private key PkA 312 and sends the result 365 to Entity B 320, which verifies 328 the received signed data 365 using the public key pkA 311 of Entity A 310, previously obtained, and compares 329 it with the generated random number. If the comparison is successful, the private key is authenticated and a result 370 is sent to Entity A 310. Like in figure 2, figure 3 only shows authentication at one side, but it could be easily extended to the other side as well.

The structure comprising the signed public key is preferably a certificate. The trusted party 380 empowered to sign the certificate is preferably a Certificate Authority (CA). In order for a party to be authenticated, it must have an RSA key-pair and a certificate attesting to the authenticity of the public key. The certificate must be signed by a Certificate Authority (CA) that is trusted by the other authenticating party. The authenticating party is expected to possess the public key from the trusted CA. Once performed the authentication process and before establishing the secure channel, session keys have to be generated and agreed by both entities.

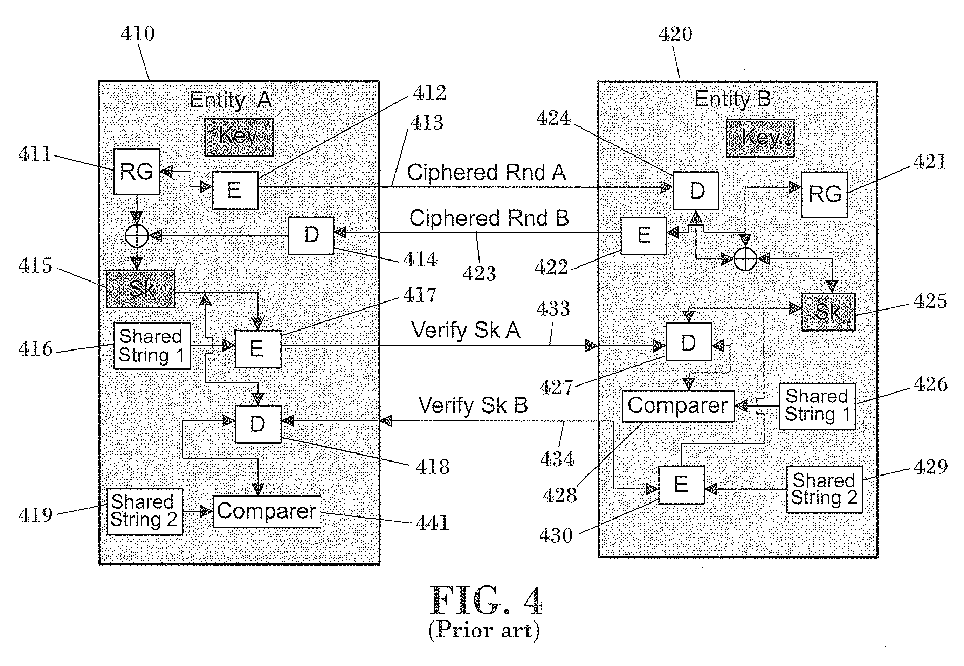

Figure 4 shows and example of how session keys can be generated after symmetric authentication. Random numbers are generated in both entities 410 420 by means of their respective random generators 411 421. These random numbers are ciphered 412 422 using a symmetric algorithm with the shared private key. The results are sent 413 423 to the other entity 420 410, which performs an XOR operation between the received random number which is deciphered 414 424 and the one which was previously generated 411 421. At both sides, the result is the session key 415 425. Afterwards, a confirmation of the session key 415 425 can be performed following, for example, next steps: A first shared string 416 is ciphered 417 by one entity 410 with the session key 415 and is sent 433 to the other entity 420, which decrypts 427 the received string and compares 428 it to its first shared string 426. Analogously, a second shared string 429 is ciphered 430 by the other entity 420 with the session key 425 and is sent 434 to the other side 410. The receiving entity 410 decrypts 418 the received string and compares 441 it with its second shared string 419. In the event that both comparisons are successful, the session key 415 425 is valid and the secure channel is built.

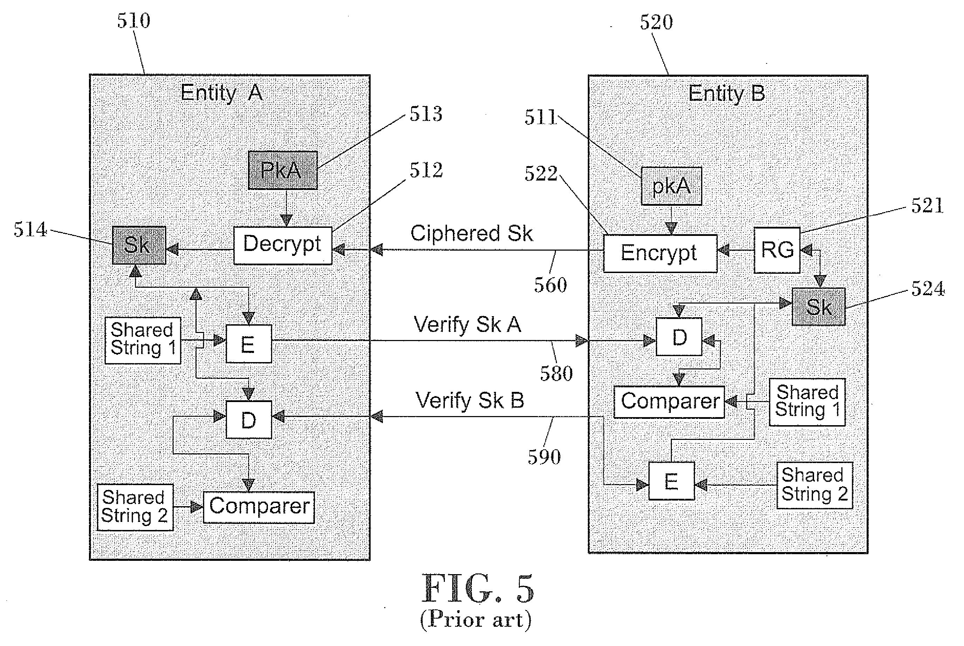

Figure 5 shows an example of session key generation after asymmetric authentication. In this case, only one entity 520 generates 521 a random number 521 and uses the public key pkA 511 of the other entity 510 to encrypt 522 the random number. The random number is sent 560 and decrypted 512 at the other side 510 using its own private key PkA 513. This random number, which is now present in both entities, is the session key 514 524. Like in figure 4, a confirmation process 580 590 of the session key can occur between both entities.

The problem of lack of security related to the content which is stored in a mass storage memory has already been addressed by secure protocols like the Trusted Flash protocol, as described in US 2007/0136501. This patent application discloses techniques for transmitting application-specific instructions between a host and a memory card. The commands for the application-specific protocol are embedded along with a signature in the data portion of a transmission protocol that is used to communicate between the host and the memory card.

Thus, one system which uses a secure channel mechanism is the TrustedFlash card, which allows protecting the content that is stored in its flash memory. A secure flash memory card has the ability to identify the entity which is requesting a card service, where the entity is memory access related or not. TrustedFlash provides several types of authentication algorithms and allows for multiple authenticated entities to concurrently use the card.

The TrustedFlash security system allows for configuring a specific set of permissions (rights) for every authenticated entity. Every command that is received by the flash memory card is associated with a currently authenticated entity, and the service request is validated against the registered rights for that entity. The card grants the request and executes the command only if the requesting entity is permitted to use that service. The authorization system supports several different classes of services.

Flash memory cards are used as mass storage devices. Other types of mass storage devices allow data to be stored in files that are organized by a file structure that is managed by a host system. TrustedFlash cards follow this same storage method. However, TrustedFlash cards (TF cards) do not control the file system. Individual files may be encrypted with specific content keys in order to provide file level protection.

The TrustedFlash authorization system provides enforcement of read and write access rights to the file content keys. This protects data through prevention of data usage rather than data access.

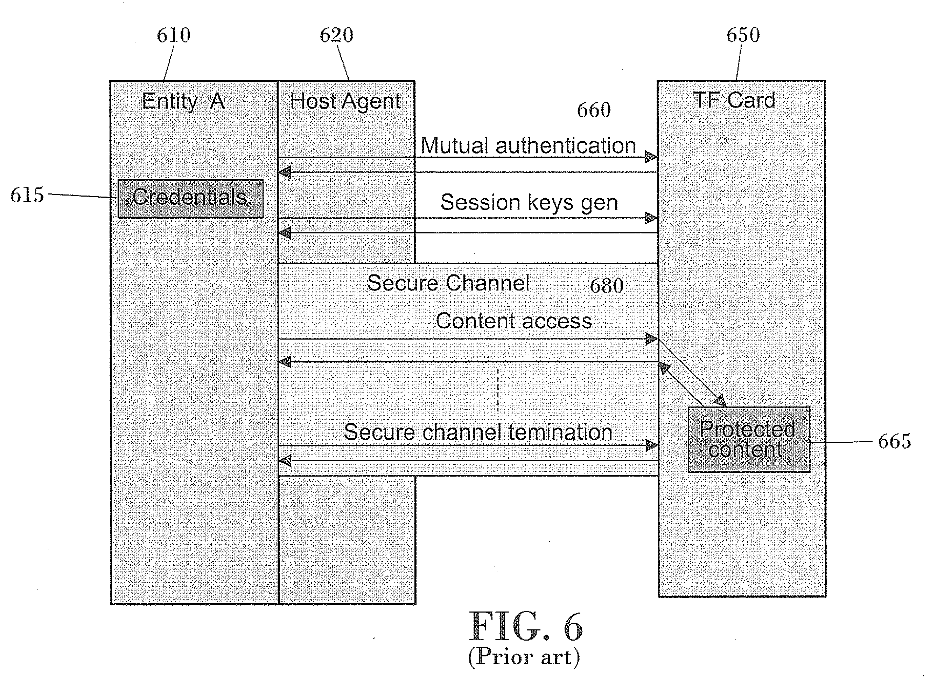

Figure 6 shows a detailed diagram of a possible TrustedFlash service. Entity A 610 is accessing protected content 655 which is stored in a TF card 650. In order to use TF functionality, a host agent layer 620 is required; host agent layer 620 offers non-standard file system services to applications/entities. In the diagram, authentication 660 and secure channel establishment 680 between the entity A 610 (e.g. a mobile terminal) and the TF Card 650 are shown. It is also shown how protected data 655 inside the TF card 650 becomes available for entity A 610 through the secure channel 680. The credentials 615 which are stored in entity A 610 allow accessing to several services and contents.

So far, a secure communication between a first entity (e.g. a mobile terminal) and a second entity (e.g. a TrustedFlash card) has been described. However, it is also possible to include a new entity in that scheme. Such an entity can be, for example, a smart card which, since it can be considered a secure token, allows enhancing the security of the whole system.

In this arrangement, the smart card can contain a required credential to access a stored content in the TrustedFlash card, having the MNO to which the user of the mobile terminal is subscribed full control over the credentials. If the stored content has to be reproduced by an application running in the mobile terminal, like a player application, it has to retrieve the credential which is stored in the smart card.

In this new situation, a problem may arise because the mobile application, once it has retrieved the credential from the smart card, can use that credential at any moment and can deliver it to other entities. The MNO thus loses control over the credential and over the content associated to it.

One possible solution to such problem is that the mobile application retrieves the required content through the smart card. Thus, the mobile application requests the content from the smart card and the smart card requests it in turn from the TF card. This way, the lack of visibility and control of the MNO is solved. However, a new problem regarding performance arises, since it is much faster for the mobile application to retrieve the content directly from TF card than passing through the smart card, because the communication channel and protocol to communicate with the smart card are very inefficient compared to high speed protocols used between the mobile application and the TF card.

### SUMMARY OF EMBODIMENTS OF THE INVENTION

The above mentioned problems are addressed by means of delegating a secure channel, which is established between a first entity and a second entity, to a third entity which is trusted by one of said first or second entities.

The new approach allows the use of that secure channel established between a first entity and a second entity by that third entity, trusted by the first or second one. It also allows that trusted third party (entity) to inherit some of the privileges of the entity which trusts that trusted third entity. These privileges allow the third entity to perform certain operations in relation to those first and second entities.

Various embodiments are possible to carry out the foregoing, including methods and systems of secure transfer of data between entities.

In one embodiment, a method is provided of secure transfer of data between entities. This method comprises: establishing a first secure channel between a first entity having at least one first credential and a second entity having at least one second credential; establishing a second secure channel between said first entity and a third entity, said third entity being trusted by said first entity; through said second secure channel between said first entity and said third entity, delegating said first secure channel from said first entity to said third entity for transferring data between said second entity and said third entity.

In a particular embodiment, the step of establishing said first secure channel comprises: authenticating the first entity by the second entity and vice versa, using the respective credentials of said first and second entities; generating session keys by each of said first entity and second entity respectively; establishing said first secure channel. It further comprising assigning privileges from the first entity to the second entity and vice versa.

In a particular embodiment, said step of delegating said first secure channel comprises the steps of: requesting by said third entity the delegation of a right to use said first secure channel; passing from said first entity to said third entity session credentials required for using said first secure channel and for enabling said third entity to communicate with said second entity. Said required session credentials are at least one session key of said first secure channel.

The step of delegating said first secure channel optionally comprises the step of negotiating between said first entity and said second entity for creating at least one session credential for said third entity. It also comprises the step of creating at least one session privilege for said third entity.

When said third entity accesses said second entity via said delegated secure channel, said second entity assigns at least one session privilege to said third entity, said at least one session privilege defining the processes and/or data of said second entity which are allowed to be accessed by said third entity via said delegated secure channel.

In another embodiment, a method is provided of secure transfer of data between entities, which comprises: establishing a first secure channel between an application running in a universal integrated circuit card having at least one first credential and a functionality of a non-volatile memory card having at least one second credential; establishing a second secure channel between said application running in a universal integrated circuit card and an application running in a mobile terminal, said application running in a mobile terminal being trusted by said application running in a universal integrated circuit card; through said second secure channel between said application running in a universal integrated circuit card and said application running in a mobile terminal, delegating said first secure channel from said application running in a universal integrated circuit card to said application running in a mobile terminal for transferring data between said functionality of a non-volatile memory card and said application running in a mobile terminal.

In a particular embodiment, said functionality of a non-volatile memory card is firmware, hardware or a combination thereof.

In a particular embodiment, said non-volatile memory card is a TrustedFlash card. Said Trusted Flash card is located within said mobile terminal.

Said second secure channel is established between said application running in said universal integrated circuit card and said application running in said mobile terminal, said application running in said mobile terminal requiring access to protected content located within said Trusted Flash card.

Said delegated secure channel is established between said application running in said mobile terminal and said functionality of said TrustedFlash card through a proxy application located within said mobile terminal.

In another embodiment, a system comprising a first entity, a second entity and a third entity is provided. It comprises: means for establishing a first secure channel between said first entity and said second entity; means for establishing a second secure channel between said first entity and said third entity, said third entity being trusted by said first entity; means for delegating said first secure channel through said second secure channel between said first entity and said third entity.

In another embodiment, a system comprising an application running in a universal integrated circuit card, a functionality of a non-volatile memory card and said an application running in a mobile terminal is provided. The system comprises: means for establishing a first secure channel between said application running in a universal integrated circuit card and said functionality of a non-volatile memory card; means for establishing a second secure channel between said application running in a universal integrated circuit card and said application running in a mobile terminal, said application running in a mobile terminal being trusted by said application running in a universal integrated circuit card; means for delegating said first secure channel through said second secure channel between said application running in a universal integrated circuit card and said application running in a mobile terminal.

In a particular embodiment, said non-voiatiie memory card is a TrustedFlash card. Said TrustedFlash card is located within said mobile terminal.

In another embodiment, a computer program comprising computer program code adapted to perform the steps of the method previously indicated when said program is run on a smart card, a computer, a digital signal processor, a field-programmable gate array, an application-specific integrated circuit, a micro-processor, a micro-controller, or any other form of programmable hardware is provided.

The advantages of this new approach will become apparent in the description that follows. Moreover, variations to the embodiments described therein are possible and will also become apparent therefrom.

### BRIEF DESCRIPTION OF THE DRAWINGS

To complete the description and in order to provide for a better understanding of the embodiments described here, a set of drawings is provided. Said drawings form an integral part of the description and illustrate a preferred embodiment of the invention, which should not be interpreted as restricting the scope of the invention, but just as an example of how the invention can be embodied. The drawings comprise the following figures:
Figure 1 shows how two entities can securely communicate through an unsecured communication medium by establishing a secure channel.
Figure 2 shows an example of a symmetric authentication process.
Figure 3 shows an example of an asymmetric authentication process.
Figure 4 shows an example of how session keys can be generated after symmetric authentication.
Figure 5 shows an example of session key generation after asymmetric authentication.
Figure 6 shows a diagram of a possible TrustedFlash service.
Figure 7 represents an exemplary embodiment which shows how secure transfer of data between entities is carried out.
Figure 8 represents another exemplary embodiment which shows how secure transfer of data between entities is carried out.
Figure 9 shows a flow diagram indicating the steps carried out between the entities of figure 8 in order to assure secure transfer of data.

### DESCRIPTION OF PREFERRED EMBODIMENTS OF THE INVENTION

In this context, the term "comprises" and its derivations (such as "comprising", etc.) should not be understood in an excluding sense, that is, these terms should not be interpreted as excluding the possibility that what is described and defined may include further elements, steps, etc.

The implementation of various embodiments of the present invention can be carried out as follows:

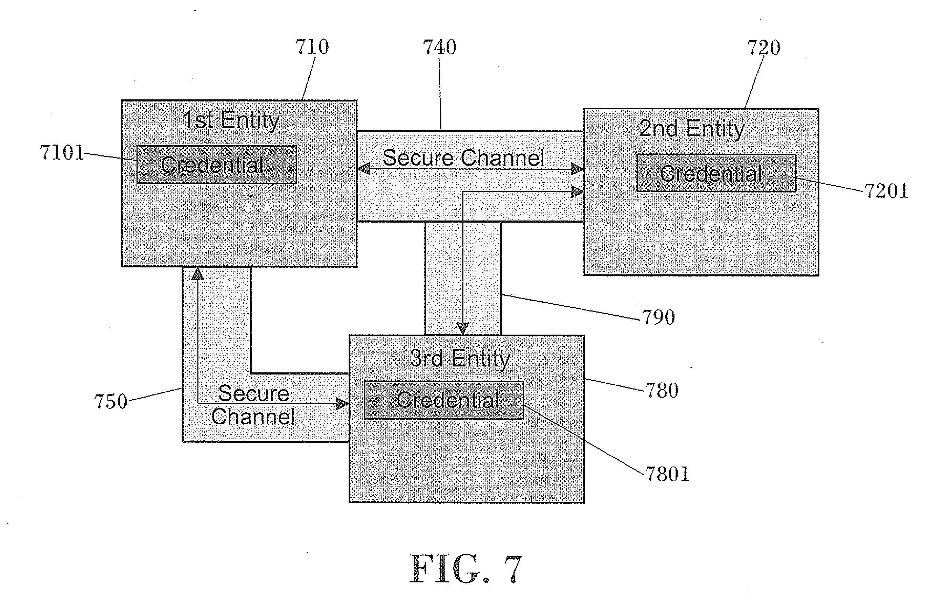

Figure 7 shows how a delegated secure channel is established. Figure 7 shows three entities: a first entity 710, a second entity 720 and a third entity 780. Non-limiting examples of entities are: Attending to where they can be executed: a smart card application, a SIM card application, a UICC application, a RUIM application, a USIM application, an ISIM application, a Java Card application, a UICC Toolkit application, a mobile application, a functionality of a non-volatile memory, a functionality of a TrustedFlash card, a personal computer application and a MNO server application. Attending to the function they are configured to carry out: a server application, a SCWS (Smart Card Web Server) application, a servlet and a client application (i.e. a browser).

The first, entity 710 comprises at least one first credential 7101. The second entity 720 comprises at least one second credential 7201. Non-limiting examples of the credentials comprised in any of these entities are keys, such as symmetric keys and asymmetric keys. The calculation of such credentials is out of the scope of the present disclosure. A secure channel 740 is established between the first entity 710 and the second entity 720. Preferably, the stage of establishing this secure channel 740 comprises a step of authentication between the first entity 710 and the second entity 720. This authentication is mutual: the first entity 710 authenticates the second entity 720 and vice versa. This is done by using the respective credentials 7101 7102 of the two entities 710 720. That authentication is a conventional one, carried out as explained in the prior art section. The stage of establishing this secure channel 740 also comprises, once the mutual authentication between the first entity 710 and the second entity 720 has been done, a step of generating session keys (not illustrated in figure 7). Both the first entity 710 and the second one 720 generate session keys. This generation of session keys is done according to any conventional way of generating such keys, as mentioned in the prior art section. Each session has its own, specific session key, with each of the keys being generated separately on each of the sides but whose key value is the same. The life of these session keys ends with the end of the session. The credentials of an entity, however, remain the same. Once the entities are authenticated and the session keys generated, the secure channel 740 is established.

During the authentication step, each entity 710 720 assigns privileges (not illustrated in figure 7) to the other entity. The privileges can be either access to data or access to a process. As a matter of example, if the entity is a functionality of a non-volatile memory card, the privileges this functionality can assign to other entities are the access to part of its data (because the memory card does not comprise processes). However, if the entity is an entity comprising processes, the privileges it can assign to other entities are the access to some processes. These privileges therefore define the processes and data of one entity which can be acceded by the other entity.

The third entity 780 of figure 7 is trusted by the first entity 710. This means that the third entity has the credential which allows the first entity, after an authentication process, to know that this third entity is a secure entity with no malicious purpose and which follows the procedures under the security policy of the first entity. The process of trusting that third entity 780 by the first entity 710 is out of the scope of the present disclosure. It is done by any conventional way of trusting between entities. Once the secure channel 740 is established between the first entity 710 and the second one 720, a second secure channel 750 between the first entity 710 and the third one 780 is established. The establishment of this second secure channel 750 is carried out in the same way as the establishment of the first secure channel 740, mutatis mutandis. Either the secure channel 740 between the first entity 710 and the second one 720 is established first, or the secure channel 750 between the first entity 710 and the third one 780 is established first, or both secure channels 740 750 are established in parallel. In order to complete the delegation, both channels have to be already established.

Through this second secure channel 750, the third entity 780, trusted by the first entity 710 but not by the second one 720, asks the entity which trusts it the delegation of the secure channel 740 established between the first 710 and second 720 entities. As a reply to this request, the first entity 710 passes the third entity 780 session credentials (not illustrated in figure 7) required in order to use the first secure channel and be able to communicate with the second entity 720. Non-limiting examples of these session credentials can be the session keys of the secure channel 740 established between the first entity 710 and the second entity 720 or different session keys agreed to between the first and second entities during the negotiation process of the delegation. Therefore, a delegation is to be understood as passing from one entity A to another one C session credentials required for using a secure channel established between that entity A and another entity B, for that entity C to be able to use that secure channel and thus communicate with that entity B. Optionally, it may also comprise a negotiation between entity A and entity B in order to establish a session credential and privileges to be used by entity C in the secure channel. The delegation of the first secure channel 740 is thus established.

The step of delegating the first secure channel 740 to the third entity 780 comprises a stage of negotiating between the first entity 710 and the second entity 720, for creating at least one session credential (not illustrated in figure 7) for the third entity 780. This negotiation is as follows: the first entity 710 sends a command to the second entity 720, asking for particular privileges to be assigned to the third entity 780. If the second entity 720 agrees with the request, it includes, in its response to the command, a session credential which is internally associated within the second entity 720 to the requested privileges, for being assigned to the third entity 780. From that at least one session credential, a session privilege (not illustrated in figure 7) can be created. This session privilege is agreed between the first entity 710 and the second entity 720 and is assigned to the third entity 780 when it accesses the second entity 720. As said before, an example of a privilege is the access rights to determined data or processes. When the third entity 780 accesses the second entity 720 via the delegated first secure channel 740, the second entity 720 assigns at least one session privilege to the third entity 780. This session privilege defines the processes or data of the second entity 720 which are allowed to accede by the third entity 780. These session privileges can be of the same level as the privileges assigned by the second entity 720 to the first one 710, or of lower level.

In any of these exemplary embodiments, the delegation of the secure channel 740 is only valid during the current secure channel session (first secure channel) established between the first entity 710 ant the second entity 720. Session credentials are only valid while the first secure channel is alive. In the event that the trusted entity 780 requires them in another session, obtaining a new session credential or new session credentials is required from the trusting entity. The delegated secure channel 790 is thus established.

In a particular embodiment, a system is provided, having a first entity 710, a second entity 720 and a third entity 780. The system comprises means for establishing a first secure channel 740 between the first entity 710 and the second entity 720. It also comprises means for establishing a second secure channel 750 between the first entity 710 and the third entity 780, for which the third entity 780 has been previously trusted by the first entity 710. The system also comprises means for delegating the first secure channel 740 through the second secure channel 750 between the first entity 710 and the third entity 780.

In another particular embodiment, a computer program comprising computer program code adapted to perform the steps of delegating a secure channel is presented, when the program is run on a smart card, a computer, a digital signal processor, a field-programmable gate array, an application-specific integrated circuit, a micro-processor, a micro-controller, or any other form of programmable hardware.

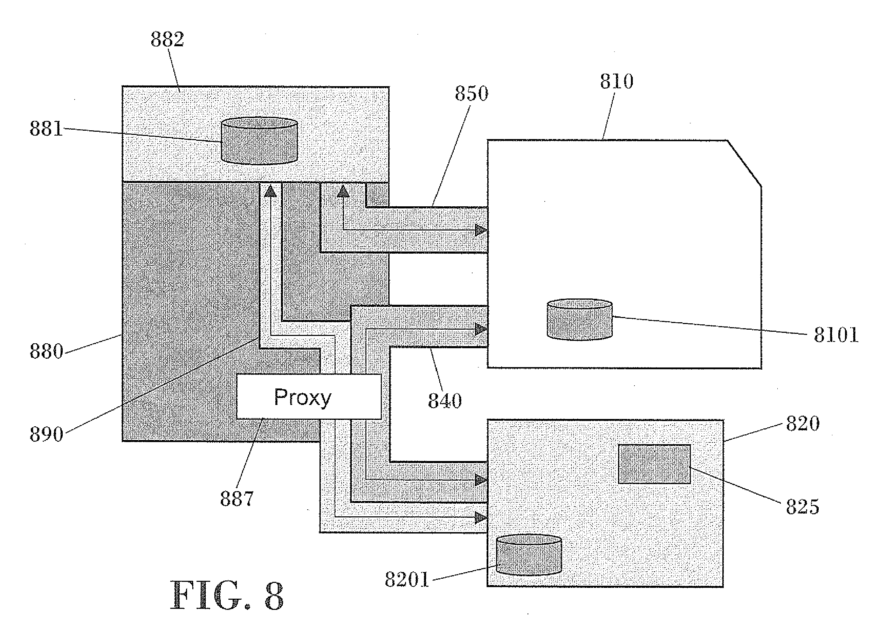

Figure 8 is related to another embodiment disclosing how a delegated secure channel is established. Like figure 7, figure 8 shows three entities: a first entity 810, which in this particular embodiment is an application running in a universal integrated circuit card 810, such as a SIM card or a USIM card; a second entity 820, which in this particular embodiment is a functionality of a non-volatile memory card 820, such as a TrustedFlash card; and a third entity 880, which in this particular embodiment is an application 882 running in a mobile terminal 880.

Like in figure 7, the application running in the universal integrated circuit card (UICC) 810 comprises at least one credential 8101. The functionality of the non-volatile memory card 820 comprises at least one credential 8201. Non-limiting examples of the credentials comprised in any of these entities are keys, such as symmetric keys and asymmetric keys, whose creation is out of the scope of this disclosure. A secure channel 840 is established between the application running in the UICC 810 and the functionality of the non-volatile memory card 820. Preferably, the step of establishing this secure channel 840 comprises a step of mutual authentication between both entities. This is done by using the respective credentials 8101 8201 of the two entities. The step of establishing this secure channel 840 also comprises, once the authentication between the application running in the UICC 810 and the functionality of the non-volatile memory card 820 has been done, a step of generating session keys by both entities. This generation of session keys is done according to any conventional way of generating such keys, as mentioned in the prior art section. Each session has its own, specific session keys. The life of these session keys ends with the end of the session. The at least one credential 8101 8201 of each entity, however, remain the same. Non-limiting examples of the session keys which can be generated when establishing the secure channel 840 are: symmetric and asymmetric keys. Once the application in the UICC 810 and the functionality of the non-volatile memory card 820 have authenticated each other and both have generated respective session keys, the secure channel 840 is established.

During the authentication step, the application in the UICC 810 assigns privileges to the functionality of the non-volatile memory card 820 and vice versa. The privileges (not illustrated in figure 8) assigned to the non-volatile memory card 820 by the application running in the UICC 810 are: access to some UICC files and to the UICC application. The privileges assigned to the application running in the UICC 810 by the functionality of the non-volatile memory card 820 are permissions to access part of the data stored in the non-volatile memory card. These privileges therefore define the data of the non-volatile memory card which can be acceded by the application running in the UICC.

The application 882 running in the mobile terminal 880 of figure 8 is trusted by the application running in the UICC 810. Once the secure channel 840 is established between the application running in the UICC 810 and the functionality of the non-volatile memory card 820, a second secure channel 850 between the application running in the UICC 810 and the application 882 running in a mobile terminal 880 is established. The establishment of this second secure channel 850 is carried out in the same way as the establishment of the first secure channel 840, mutatis mutandis. Either the secure channel 840 between the application running in the UICC 810 and the functionality of the non-volatile memory card 820 is established first, or the secure channel 850 between the application running in the UICC 810 and the application 882 running in a mobile terminal 880 is established first, or both secure channels 840 850 are established in parallel.

Like in the previous embodiment, through this second secure channel 850, the application 882 running in the mobile terminal 880, trusted by the application running in the UICC 810 but not by the functionality of the non-volatile memory card 820, asks the application running in the UICC the delegation of right to use the secure channel 840 established between the application running in the UICC and the functionality of the non-volatile memory card 820. As a reply to this request, the application running in the UICC 810 passes the application 882 running in the mobile terminal 880 the session credentials (not illustrated in figure 8) required in order to use the secure channel 840 and be able to communicate with the functionality of the non-volatile memory card 820. Non-limiting examples of these session credentials can be the session keys of the secure channel 840 established between the application running in the UICC 810 and the functionality of the non-volatile memory card 820. Therefore, the delegation is to be understood as passing from an application running in the UICC 810 to another application 882 running in the mobile terminal 880 session credentials required for using the secure channel 840 established between that application running in the UICC 810 and the functionality of the non-volatile memory card 820, for that application 882 running in the mobile terminal 880 to be able to use that secure channel and thus communicate with that non-volatile memory card 820. The delegation of the first secure channel 840 is thus established.

Like in the embodiment illustrated in figure 7, the step of delegating the first secure channel 840 to the application 882 running in a mobile terminal 880 comprises an optional step of negotiating between the application running in the UICC 810 and the functionality of the non-volatile memory card 820, for creating at least one session credential (not illustrated in figure 8) for the application running in the mobile terminal 880. From that at least one session credential, a session privilege (not illustrated in figure 8) can be created. When the application 882 running in the mobile terminal 880 accesses the functionality of the non-volatile memory card 820 via the delegated secure channel 890, the non-volatile memory card 820 assigns at least one session privilege to the application 882 running in the mobile terminal 880. This session privilege defines the data of the functionality of the non-volatile memory card 820 to which the application 882 running in the mobile terminal 880 can access. As a matter of example, a mobile terminal application can access to a memory file, like a movie file or mp3 file, which is protected, and the privileges to access to this file are associated to the session credential used by the mobile terminal application. These privileges (not illustrated in figure 8) can be of the same level as those assigned by the functionality of the non-volatile memory card 820 to the application running in the UICC 810, or of lower level.

The delegation of the secure channel 840 is only valid until the channel which was delegated is terminated. The secure channel is terminated when one of the entities desires to finish the communication by means of and specific secure channel command (i.e. terminate secure channel command) or when one of the entities realizes that the other entity is not operative or when one of the entities realizes that a communication error or security issue has occurred in the secure channel or others. This means that the session credentials which are obtained by the application 882 running in the mobile terminal 880, trusted by the application running in the UICC 810, are only usable during the current session. In the event that the trusted application 882 running in the mobile terminal 880 requires them in another session, obtaining a new session credential or new session credentials is required from the application running in the UICC 810 (trusting entity).

The second secure channel 850 is established between an application running in the universal integrated circuit card 810 and an application 882 running in the mobile terminal 880. This application 882 requires accessing to a protected content 825 located within the non-volatile memory card 820. In a particular example, this non-volatile memory card 820 is a TrustedFlash card 820. Preferably, this delegated secure channel 890 is established between the application running in the mobile terminal and the TrustedFlash card 820 through a proxy application 887 located within the mobile terminal 880. Thus, the proxy acts as a protocol converter, converting the protocol used in the communication between the application running in the UICC 810 and the application running in the mobile terminal 880 into the protocol used between the functionality of the TrustedFlash card and and the application running in the mobile terminal 880, and vice versa.

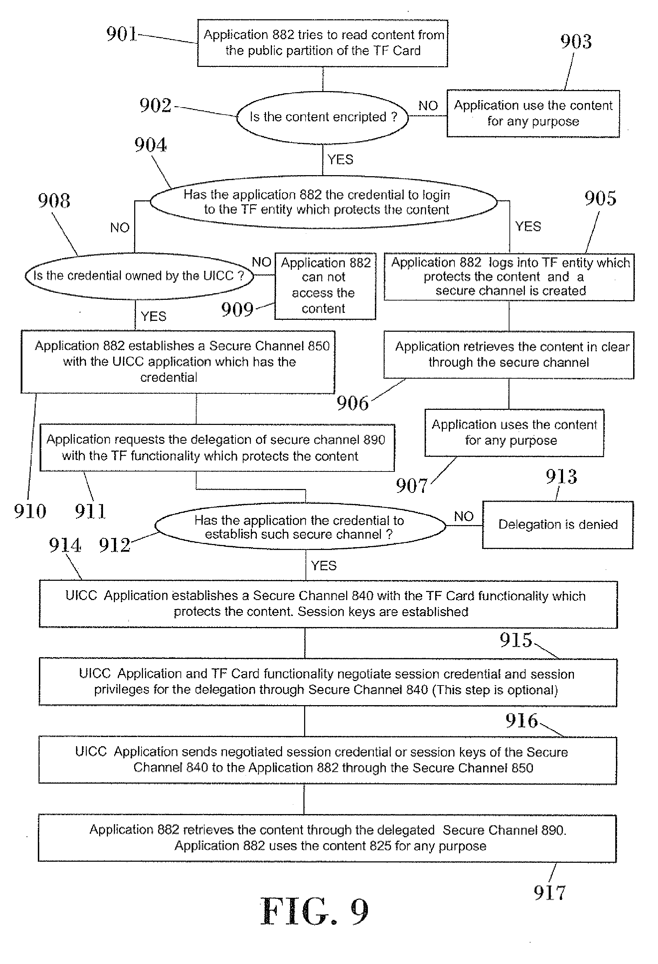

The method of secure transfer of data between the application 882 running in the mobile terminal 880 and the functionality of the TrustedFlash 880 card is next explained in relation with the flow diagram of figure 9.

First, in block 901, the application 882 running in the mobile terminal 880 tries to read content from a public partition of the TrustedFlash card 820, for which the application 882 has established a connection with a functionality of the TrustedFlash card 820 using the standard file system functionality of the mobile terminal.

If that content is not protected or encrypted, the application 882 can access and use that content. This is indicated in blocks 902 903.

If, however, the content is protected by means of encryption, the application 882 is not allowed to access that protected content 825. Then, the question which arises is whether the application 882 has the required credential or credentials for being logged to the functionality of the TrustedFlash card 820 (which protects the content 825) or not. This is indicated in block 904.

If the application 882 has those required credentials, it logs -it establishes a secure channel using the credential for the authentication phase with the functionality of the TrustedFlash card which protects the content- into the functionality of the TrustedFlash card 820 which protects that content. A secure channel between the application 882 and the functionality of the TrustedFlash card 820 is thus created. This is indicated in block 905. Through that secure channel, the application 882 can retrieve that content in clear, as shown in block 906. Finally, the application 882 can use that content for any purpose, as indicated in block 907.

If, on the contrary, the application 882 does not have those required credentials, it cannot be logged to the functionality of the TrustedFlash card 820 which protects the desired content 825.

Then, it is checked whether those required credentials are owned by the application running in the UICC 810 or not. If the application running in the UICC 810 does not own those required credentials, then the application 882 cannot access the desired content. This is indicated in blocks 908 909.

If, on the contrary, the application running in the UICC 810 owns those required credentials (the way in which the application running in the UICC 810 has achieved those required credentials being out of the scope of the present disclosure), the application 882 establishes a secure channel 850 with the application running in the UICC 810. This is indicated in block 910. Through this secure channel 850, the application 882 requests the application running in the UICC 810 the delegation of another secure channel with the functionality of the TrustedFlash card 820 which protects the desired content 825, as indicated in block 911.

If the application 882 does not have the credential or credentials for establishing that other secure channel with the functionality of the TrustedFlash card 820, such requested establishment is denied, as indicated in blocks 912 913.

If, however, the application 882 has those rights, the application running in the UICC 810 establishes a secure channel 840 with the functionality of the TrustedFlash card 820 (which protects the desired content 825). This establishment of the secure channel 840 between the application running in the UICC 810 and the functionality of the TrustedFlash card 820 comprises authenticating each other and generating session keys (by both). This is indicated in block 914.

Once this secure channel 840 is established, the application running in the UICC 810 sends the application 882, through the secure channel 850 between the application 882 and the application running in the UICC 810, the required session credentials of the secure channel 840. These session credentials are preferably session keys (temporal, that is to say, which last as long as the corresponding session is alive). This is shown in block 916.

Prior to the sending of this required session credentials, an optional negotiation between the application running in the UICC 810 and the functionality of the TrustedFlash card 820 is done, as indicated by block 915, for deciding which session credentials and session privileges are given to the application. 882 for delegating the secure channel 840. This is indicated by block 915.

Finally, once the secure channel 840 is delegated to the application 882, this application 882 retrieves the protected content 825 through the delegated secure channel. As indicated in block 917, the application 882 can use such content 825 for any purpose.

The establishment of the secure channel (block 914) between the application running in the UICC (810) and the functionality of the TrustedFlash card 820 can be carried out prior to the request (block 911) by the application 882 to establish a secure channel with the functionality of the TrustedFlash card 820.

The establishment of the secure channel (block 914) between the application running in the UICC and the functionality of the TrustedFlash card 820 can also be carried out prior to the establishment (block 910) by the application 882 of a secure channel with the application running in the UICC (810).

The various embodiments of the invention are obviously not limited to the specific embodiments described herein, but also encompass any variations that may be considered by any person skilled in the art (for example, as regards the choice of components, configuration, etc.), within the general scope of the invention as defined in the appended claims. Accordingly, the claimed invention as recited in the appended claims is not limited to the embodiments described herein.

## Claims

1. A method of secure transfer of data between entities, which comprises:
establishing a first secure channel (740, 840) between a first entity (710, 810) having at least one first credential (7101, 8101) and a second entity (720, 820) having at least one second credential (7201, 8201);
establishing a second secure channel (750, 850) between said first entity (710, 810) and a third entity (780, 880), said third entity (780, 880) being trusted by said first entity (710, 810);
through said second secure channel (750, 850) between said first entity (710, 810) and said third entity (780, 880), delegating (790, 890) said first secure channel (740, 840) from said first entity (710, 810) to said third entity (780, 880) for transferring data between said second entity (720, 820) and said third entity (780, 880).

2. The method according to claim 1, wherein the step of establishing said first secure channel (740, 840) comprises:
authenticating the first entity (710, 810) by the second entity (720, 820) and vice versa, using the respective credentials (7101, 8101) of said first and second entities;
generating session keys by each of said first entity (710, 810) and second entity (720, 820) respectively;
establishing said first secure channel (740, 840).

3. The method according to claim 2, further comprising assigning privileges from the first entity (710, 810) to the second entity (720, 820) and vice versa.

4. The method according to any preceding claim, wherein said step of delegating said first secure channel (740, 840) comprises the steps of:
requesting by said third entity (780, 880) the delegation of a right to use said first secure channel (740, 840);
passing from said first entity (710, 810) to said third entity (780, 880) session credentials required for using said first secure channel (740, 840) and for enabling said third entity (780, 880) to communicate with said second entity (720, 820).

5. The method according to claim 4, wherein said required session credentials are at least one session key of said first secure channel (740, 840).

6. The method according to any preceding claim, wherein said step of delegating said first secure channel (740, 840) comprises the step of negotiating between said first entity (710, 810) and said second entity (720, 820) for creating at least one session credential for said third entity (780, 880).

7. The method according to claim 6, further comprising the step of creating at least one session privilege for said third entity (780, 880).

8. The method according to claim 7, wherein, when said third entity (780, 880) accesses said second entity (720, 820) via said delegated secure channel (790, 890), said second entity (720, 820) assigns at least one session privilege to said third entity (780, 880), said at least one session privilege defining the processes and/or data of said second entity (720, 820) which are allowed to be accessed by said third entity (780, 880) via said delegated secure channel (790, 890).

9. The method according to any preceding claim, wherein said first entity is an application running in a universal integrated circuit card (810), said second entity is a functionality of a non-volatile memory card (820) and said third entity is an application (882) running in a mobile terminal (880).

10. The method according to claim 9, wherein said functionality of a non-volatile memory card (820) is firmware, hardware or a combination thereof.

11. The method according to claim 9, wherein said non-volatile memory card (820) is a TrustedFlash card.

12. The method according to claim 11, wherein said TrustedFlash card (820) is located within said mobile terminal (880).

13. The method according to claim 11, wherein said second secure channel (850) is established between said application running in said universal integrated circuit card (810) and said application (882) running in said mobile terminal (880), said application (882) running in said mobile terminal (880) requiring access to protected content (825) located within said TrustedFlash card (820).

14. The method according to claim 11, wherein said delegated secure channel (890) is established between said application running in said mobile terminal (880) and said functionality of said TrustedFlash card (820) through a proxy application (887) located within said mobile terminal (880).

15. A system comprising a first entity (710, 810), a second entity (720, 820) and a third entity (780, 880), said system comprising:
means for establishing a first secure channel (740, 840) between said first entity (710, 810) and said second entity (720, 820);
means for establishing a second secure channel (750, 850) between said first entity (710, 810) and said third entity (780, 880), said third entity (780, 880) being trusted by said first entity (710, 810);
means for delegating said first secure channel (740, 840) through said second secure channel (750, 850) between said first entity (710, 810) and said third entity (780, 880).

16. The system according to claim 15, wherein said first entity is an application running in a universal integrated circuit card (810), said second entity is a functionality of a non-volatile memory card (820) and said third entity is an application (882) running in a mobile terminal (880).

17. The system according to claim 16, wherein said non-volatile memory card (820) is a TrustedFlash card.

18. The system according to claim 17, wherein said TrustedFlash card (820) is located within said mobile terminal (880).

19. A computer program comprising computer program code adapted to perform the steps of the method according to any claims from 1 to 14 when said program is run on a smart card, a computer, a digital signal processor, a field-programmable gate array, an application-specific integrated circuit, a micro-processor, a micro-controller, or any other form of programmable hardware.
